# EUROPÄISCHE PATENTSCHRIFT

(11) **EP 1 344 034 B1**
(45) Veröffentlichungstag und Bekanntmachung des Hinweises auf die Patenterteilung: **26.10.2005**
(21) Anmeldenummer: 01272012.4
(22) Anmeldetag: 14.12.2001
(51) Int. Cl.: G01L 9/00, G01L 19/14

(54) **DRUCKMESSVORRICHTUNG**
PRESSURE MEASURING DEVICE
DISPOSITIF DE MESURE DE PRESSION

(30) Priorität: 22.12.2000 DE 10064811
(43) Veröffentlichungstag der Anmeldung: 17.09.2003
(73) Patentinhaber: Endress + Hauser GmbH + Co. KG, 79689 Maulburg (DE)
(72) Erfinder: ALZNAUER, Miroslaw, 79697 Wies (DE); UEHLIN, Thomas, 79650 Schopfheim (DE); GUTMANN, Frank, 79112 Freiburg (DE)
(74) Vertreter: Andres, Angelika Maria
(86) Internationale Anmeldenummer: PCT/EP2001/014791
(87) Internationale Veröffentlichungsnummer: WO 2002/052239

(56) Entgegenhaltungen:
- DE-A- 4 213 857
- DE-A- 4 234 290
- US-A- 4 539 849

## Beschreibung

Die Erfindung bezieht sich auf eine Druckmeßvorrichtung.

Genauer betrifft die Erfindung eine Druckmeßvorrichtung mit einem Drucksensorelement, das an einer Stirnseite einen membranartigen Verformungskörper aufweist. Das Drucksensorelement ist in einem Aufnahmerohr angeordnet, wobei der membranartige Verformungskörper einer Sensoröffnung zugewandt ist, an der im Betrieb der Druckmeßvorrichtung ein Meßmedium ansteht. Die Sensoröffnung wird durch eine Schulter begrenzt, die sich von der Wand des Aufnahmerohrs radial einwärts erstreckt und eine axiale Anschlagfläche für das Sensorelement definiert.

Auf der dem Meßmedium abgewandten Seite des Drucksensorelements ist vorzugsweise im Aufnahmerohr eine elektronische Schaltung zur Verarbeitung der primären Sensorsignale vorgesehen. Zwischen der Stirnseite des Drucksensorelements und der axialen Anschlagfläche des Aufnahmerohr ist meistens ein Dichtungselement angeordnet, um das Eindringen des Meßmediums in den Inneraum des Aufnahmerohrs zu verhindern.

Für Druckmessvorrichtungen des genannten Typs erweist es sich als schwierig, eine zuverlässige Dichtung zwischen dem Drucksensorelement und dem Aufnahmerohr zu erzielen, ohne die Meßgenauigkeit des Sensors aufgrund mechanischer Spannungen zu beeinträchtigen.

Der Erfindung liegt daher die Aufgabe zugrunde, eine Druckmeßvorrichtung vorzuschlagen, welche das beschriebene Problem überwindet.

Die Aufgabe wird gelöst durch die Druckmeßvorrichtung nach dem unabhängigen Patentanspruch.

Die beschriebene Struktur verhindert, daß bei der Montage der Druckmeßvorrichtung Drehmomente auf das Drucksensorelement übertagen werden, die zu Torsionsspannungen im Drucksensorelement führen und die Meßgenauigkeit beeinträchtigen könnten.

Bei geeigneter Materialwahl ist das Drucksensorelement somit elektrisch und / oder thermisch vom Aufnahmerohr isoliert und gegen radiale mechanische Belastungen, beispielsweise Stöße oder Schläge geschützt. Die Hülse ist vorzugsweise aus einem thermoplastischen bzw. thermoelastischen Polymer geformt.

Die Hülse wird vorzugsweise durch einen Klemmsitz im Aufnahmerohr gehalten, wobei optional formschlüssige Verbindungen zwischen der Hülse und dem Aufnahmerohr vorgesehen sein können. Bei entsprechender Dimensionierung sollte jedoch bereits der Klemmsitz ausreichen, um eine Rotation der Hülse im Aufnahmerohr zu verhindern.

Vorzugsweise ist das mindestens eine erste Rastglied als Bestandteil der Hülse oder an der Hülse ausgebildet. Es kann beispielsweise als eine Zunge ausgebildet sein, die sich von der Hülse in axialer oder radialer Richtung erstreckt. Weiterhin kann das mindestens eine erste Rastglied als Aussparung in einer inneren Mantelfläche oder einer Stirnfläche der Hülse geformt sein. Das erste Rastglied dient als Rotationsanschlag für das komplementär gestaltete mindestens eine zweite Rastglied, des Übertragungselements.

Die Rastglieder müssen so geformt sein, daß sie eine Rotation des Übertragungselementes begrenzen, aber eine axiale Bewegung des Ubertragungselements im Aufnahmerohr zumindest insoweit nicht beeinträchtigen, daß das Übertragungselement ungehindert auf dem Drucksensorelement aufsetzen kann und dieses gegen die Schulter des Aufnahmerohrs pressen kann.

Wenngleich die Erfindung grundsätzlich mit einem ersten Rastglied und einem komplementären zweiten Rastglied realisiert werden kann, ist es aus Gründen der gleichmäßigeren Kräfteverteilung bevorzugt, jeweils mehrere Paare von komplementären ersten und zweiten Rastgliedern vorzusehen, die vorzugsweise ihrer Zahl entsprechend symmetrisch angeordnet sind. Zwei Paare sind also beispielsweise um 180° um die Symmetrieachse des Aufnahmerohrs zueinander verdreht, während drei oder vier Paare jeweils Verdrehungswinkel von 120° bzw. 90° zueinander aufweisen.

Ungeachtet der obigen Überlegungen, die eine symmetrische Anordnungen begünstigen, kann eine Abweichung von der Symmetrie vorzuziehen sein, um aus hier nicht näher zu erörternden Gründen eine eindeutige Orientierung des Übertragungselements bezüglich des Aufnahmerohrs bzw. bezüglich der Hülse zu erzielen. Eine Abweichung von der Symmetrie kann beispielsweise durch Veränderung der Winkel zwischen den Rastgliedpaaren oder durch Variation der Konturen wie der Breite eines Rastgliedpaares erzielt werden.

Generell ist der erfindungsgemäße Aufbau für beliebige Drucksensorelemente verwendbar, die mit ihrer Stirnseite zu einem Meßmedium exponiert eingespannt sind, jedoch sind insbesondere kapazitive Meßzellen mit einer keramischen Meinbran, piezoresistive Zellen mit einer Siliziummembran oder induktive Meßzellen in Frage.

Wenngleich die Stirnseite des Drucksensorelements unmittelbar gegen die Schulter des Aufnahmerohrs eingespannt werden kann, ist es derzeit bevorzugt, ein Dichtelement, beispielsweise einen O-Ring, zwischen der Stirnseite des Drucksensorelements und der Schulter anzuordnen.

Die Erfindung wird anhand der nachfolgenden Zeichnungen näher erläutert. Es zeigt:
Fig. 1: einen Längsschnitt durch ein Ausführungsbeispiel einer erfindungsgemäßen Druckmeßvorrichtung; und
Fig. 2: eine Explosionszeichnung der Komponenten eines Ausführungsbeispiels einer erfindungsgemäßen Druckmessvorrichtung.

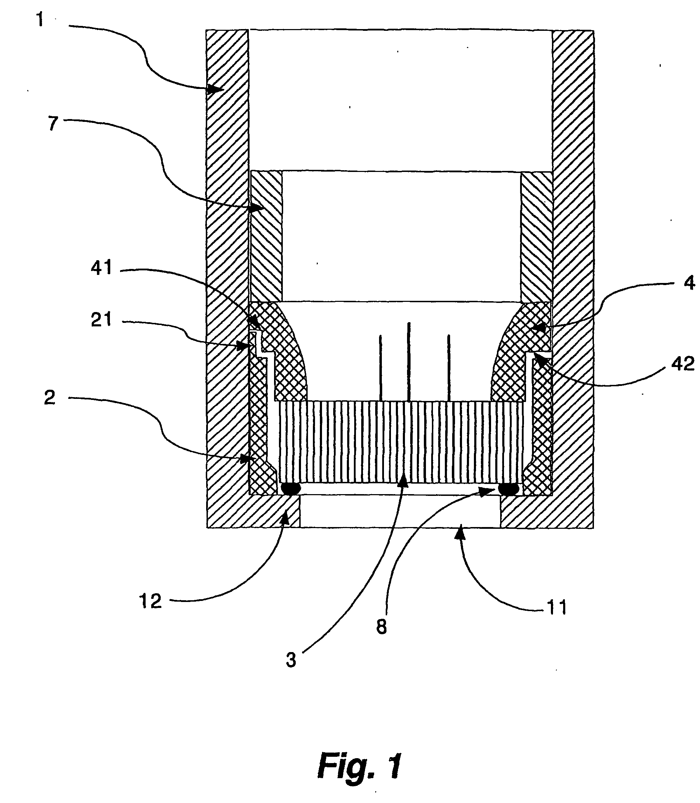

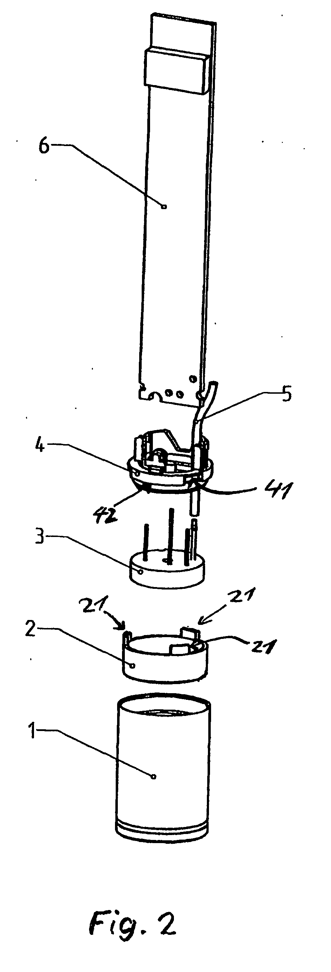

Die Fign. 1 und 2 geben einen Überblick über die Komponenten eines Ausführungsbeispiels der erfindungsgemäßen Druckmeßvorrichtung, und deren Anordnung zueinander.

Ein Aufnahmerohr 1 weist eine rückseitige Öffnung auf, durch welche die Hülse 2 in das Aufnahmerohr 1 eingesetzt wird. Beim vorliegenden Ausführungsbeispiel wird die Hülse 2 durch einen Klemmsitz im Aufnahmerohr 1 fixiert. Wie der Fig. 1 zu entnehmen ist, sitzt die Hülse im vorderen Endabschnitt des Aufnahmerohrs 1 und stößt mit ihrer ersten Stirnseite gegen eine axiale Anschlagfläche, die durch eine Schulter 12 gebildet wird, welche sich von der Rohrwand des Aufnahmerohrs 1 radial einwärts erstreckt und eine Sensoröffnung 11 definiert.

Ein im wesentlichen zylindrisches Drucksensorelement 3 ist mittels der Hülse 2 bezüglich der Sensoröffnung 11 zentriert, wobei zwischen der Stirnseite des Drucksensorelements 3 und der axialen Anschlagfläche der Schulter 12 ein Dichtelement 8 eingespannt ist. Das Dichtelement 8 ist vorzugsweise als O-Ring aus einem elastischen Material ausgebildet. Die Hülse 2 weist in der dargestelleten Ausführungsform eine radiale Anschlagfläche auf, die von der inneren Hülsenwand radial einwärts hervorsteht. Mit dieser Anordnung wird die Kontaktfläche zwischen der Mantelfläche des Drucksensorelements 3 und der Hülse reduziert, wodurch die elektrische und / oder thermische Isolierung des Drucksensorelements 3 verbessert wird. Wenngleich diese Ausgestaltung vorteilhaft ist, so kann die Erfindung auch ohne dieses Merkmal realisiert werden.

Zur axialen Fixierung des Drucksensorelements 3 ist in das Aufnahmerohr 1 ein Übertragungselement 4 eingesetzt. Das Übertagungselement 4 weist an seiner dem Drucksensorelement 3 zugewandten Stirnseite eine axiale Anschlagfläche auf, die auf der der Sensoröffnung 11 abgewandten Stirnseite des Drucksensorelements 3 aufsitzt. Vorzugsweise ist die axiale Anschlagfläche als kontinuierliche Kreisringfläche ausgebildet. In einer alternativen Ausgestaltung ist die axiale Anschlagfläche in mehrere getrennte Teilflächen zerlegt ist, die auf dem Sensorelement 3 aufsitzen.

Das Übertagungselement 4 hat an seiner dem Drucksensorelement 3 abgewandten Stirnseite eine zweite axiale Anschlagfläche auf, welcher ein Schraubelement 7 aufsitzt, welches in das Aufnahmerohr 1 eingeschraubt ist, um das Drucksensorelement 3 mittels der Übertragungshülse 4 axial einzuspannen.

Das Schraubelement 7 hat vorzugsweise zumindest in seinem dem Übertragungselement 4 zugewandten Endbereich die Form einer zylindrischen Hülse, deren Stirnseite entlang einer ringförmigen Kontaktfläche auf der zweiten axialen Anschlagfläche des Übertragungselements aufsitzt.

Insofern als die axiale Einspannkraft als Normalkraft auf die Kontaktfläche wirkt, besteht zwischen dem Schraubelement 7 und dem Übertragungselement 4 ein Reibschluß der beim Einschrauben des Schraubelements 7 ein Drehmoment bewirkt, welches mit der Einspannkraft ansteigt. Ohne weitere Vorkehrungen würde deshalb das Übertragungselement 4 dem Drehmoment folgend rotieren und gleichermaßen ein Drehmoment in das Drucksensorelement 3 einleiten, welches entsprechend bis in die der Sensoröffnung 11 zugewandte Stirnseite des Drucksensorelements 3 und in den membranartigen Verformungskörper übertragen würde. Um dies zu vermeiden, sind Paare von komplementären ersten und zweiten Rastgliedern vorgesehen, welche eine Rotation des Übertragungselements 4 im Aufnahmerohr 1 verhindern.

In der beschriebenen Ausführungsform sind die ersten Rastglieder als Zungen 21 gestaltet die sich von der Stirnfläche der Hülse 2 in axialer Richtung erstrecken.

Die zweiten Rastglieder sind als komplementäre Aussparungen 41 in der Mantelfläche eines ersten zylindrischen Abschnitts des Übertragungselements 4 gestaltet. Der erste zylindrische Abschnitt grenzt an einen zweiten zylindrischen Abschnitt mit einem kleineren Radius als der erste zylindrische Abschnitt, so daß zwischen den beiden zylindrischen Abschnitten eine Schulterfläche 42 ausgebildet ist. Die Aussparungen 41 in der Mantelfläche des ersten Abschnitts erstrecken sich in axialer Richtung bis zu der Schulterfläche 42 zwischen dem ersten und dem zweiten Abschnitt und sind zur Schulterfläche 42 hin offen.

Die Zungen 21 gelangen durch die Schulterfläche 42 mit den Aussparungen 41 in Eingriff, und verhindern somit eine Rotation des Übertragungselements 4 bezüglich der Hülse 2. Insofern, als die Hülse 2 nicht im Aufnahmerohr 1 rotieren kann, ist mit der beschriebenen Anordnung das Übertragungselement 4 auch gegen eine Rotation bezüglich des Aufnahmerohrs gesichert. Auf diese Weise wird gewährleistet, daß bei der Montage der Druckmeßvorrichtung keine störenden Drehmomente in das Drucksensorelement eingeleitet werden.

Neben der beschriebenen Anordnung von Aussparungen und Zungen sind auch weitere Ausgestaltungen der Rastglieder denkbar. Beispielsweise können sich Vorsprünge von einer Oberfläche des Übertragungselements erstrecken, die mit komplementären Aussparungen in der Hülse 2 oder der Rohrwand 1 in Eingriff gelangen.

Fig. 2 zeigt als weitere details eine Leiterplatte 6, die in einer am Übertragungselement 4 angeordneten Aufnahme gehaltert wird. Zudem ist bei dieser Ausführungsform am Übertragungselement eine Leitung 5 für die Übertragung des Referenzdrucks angeordnet. Hierbei handelt es sich jedoch lediglich um vorteilhafte bzw. zweckmäßige Ausgestaltungen, die zur Umsetzung der Erfindung nicht wesentlich sind.

Die erfindungsgemäße Druckmeßvorrichtung ist insbesondere geeignet als Tauchsensor zur Messung eines hydrostatischen Drucks, sie ist jedoch keinsesfalls auf diese Verwendung beschränkt.

Das Aufnahmerohr 1 kann außer der in den Zeichnungen dargestellten Rohrform im engen Sinn gleichermaßen durch eine im wesentlichen zylindrische Bohrung in einem massiven Körper realisiert werden, ohne vom Grundgedanken der Erfindung abzuweichen.

### Bezugszeichenliste

- 1: Aufnahmerohr
- 2: Hülse
- 3: Drucksensorelement
- 4: Übertragungselement
- 5: Referenzdruckleitung
- 6: Leiterplatte
- 7: Schraubelement
- 8: Dichtring
- 11: Sensoröffnung
- 12: Schulter
- 21: Rastglied
- 41: Aussparung
- 42: Schulterfläche

## Patentansprüche

1. Druckmeßvorrichtung, umfassend:
ein Drucksensorelement (3) mit einem in einer Stirnfläche des Drucksensorelements angeordneten membranartigen Verformungskörper;
ein im wesentlichen zylindrisches Aufnahmerohr (1) mit einem ersten Gewinde an der Rohrwand, und einer Schulter zur Aufnahme von axialen Kräften, die sich von zylindrischen Wand des Aufnahmerohrs radial einwärts erstreckt und eine Sensoröffnung definiert;
ein Schraubelement (7) mit einem zum ersten Gewinde komplementären zweiten Gewinde, und mindestens einer stirnseitigen Einspannfläche zur Aufnahme von axialen Kräften, wobei das Schraubelement in das Aufnahmerohr (1) einschraubbar ist, um das Drucksensorelement zwischen der Einspannfläche und der Schulter axial einzuspannen (3);
wobei die Druckmessvorrichtung (3) weiterhin mindestens ein erstes Rastglied (21), das bezüglich des Aufnahmerohrs (1) nicht verdrehbar ist, und ein zwischen dem Schraubelement (7) und dem Drucksensorelement (3) eingespanntes Übertragungselement (4), zur Übertragung der axialen Einspannkraft mit mindestens einem zweiten Rastglied (41) aufweist, weiches mit dem mindestens einen ersten Rastglied (21) in Eingriff gelangt um eine Rotation des Übertragungsglieds (4) zu verhindem;
wobei die Druckmessvorrichtung (3) ferner eine zylindrische Hülse (2) aufweist, die im Aufnahmerohr (1) angeordnet ist und das Drucksensorelement (3) beabstandet von der zylindrischen Wand des Aufnahmerohrs (1) positioniert, wobei die Hülse (2) das mindestens eine erste Rastglied (21) umfaßt.

2. Druckmeßvorrichtung nach Anspruch 1, wobei das mindestens eine erste Rastglied (21) als Zunge ausgebildet ist, die sich von einer Stirnfläche der Hülse (2) in axialer Richtung erstreckt.

3. Druckmeßvorrichtung nach Anspruch 1, wobei das mindestens eine erste Rastglied als Vorsprung ausgebildet ist, der sich von der Hülse (2) radial einwärts erstreckt.

4. Druckmeßvorrichtung nach Anspruch 1, wobei das mindestens eine erste Rastglied als Aussparung in der Hülse (2) ausgebildet ist.

5. Druckmeßvorrichturig nach einem der Ansprüche 1 bis 4, wobei die Hülse (2) durch einen Klemmsitz in dem Aufnahmerohr (1) fixiert ist.

6. Dnrckmeßvorrichtung nach einem der vorhergehenden Ansprüche, wobei die Hülse (2) ein erstes Eingriffsmittel und das Aufnahmerohr (1) ein komplementäres zweites Eingriffsmittel aufweist, um die Hülse formschlüssig gegen Verdrehen bezüglich des Aufnahmerohrs zu sichern.

7. Druckmeßvorrichtung nach einem der vorhergehenden Ansprüche, weiterhin umfassend einen Dichtring (8), der zwischen der Stirnfläche des Sensorelements (3) und der axialen Anschlagfläche der radialen Schulter (12) eingespannt ist.

## Claims

1. A pressure-measuring apparatus, comprising
a pressure-sensor element (3) with a diaphragm-like deformation member arranged in an end face of the pressure-sensor element;
a substantially cylindrical receiving tube (1) with a first screw thread on the tube wall, and a shoulder to absorb axial forces, which shoulder extends radially inwards from the cylindrical wall of the receiving tube and defines a sensor opening;
a screw element (7) with a second screw thread complementary to the first screw thread, and at least one clamping face on an end face to absorb axial forces, wherein the screw element is capable of being screwed into the receiving tube (1) in order to clamp (3) the pressure-sensor element axially between the clamping face and the shoulder;
wherein the pressure-measuring apparatus (3) further comprises at least one first catch member (21), which is not rotatable with respect to the receiving tube (1), and a transmission element (4), clamped between the screw element (7) and the pressure-sensor element (3), for transmitting the axial clamping force with at least one second catch member (41) which comes into engagement with the at least one first catch member (21) in order to prevent rotation of the transmission element (4);
wherein the pressure-measuring apparatus (3) additionally has a cylindrical sleeve (2) which is arranged in the receiving tube (1) and which positions the pressure-sensor element (3) at a distance from the cylindrical wall of the receiving tube (1), wherein the sleeve (2) comprises the at least one first catch member (21).

2. A pressure-measuring apparatus according to Claim 1, wherein the at least one first catch member (21) is designed in the form of a tongue which extends in an axial direction from an end face of the sleeve (2).

3. A pressure-measuring apparatus according to Claim 1, wherein the at least one first catch member is designed in the form of a projection which extends radially inwards from the sleeve (2).

4. A pressure-measuring apparatus according to Claim 1, wherein the at least one first catch member is designed in the form of a recess in the sleeve (2).

5. A pressure-measuring apparatus according to any one of Claims 1 to 4, wherein the sleeve (2) is fixed in the receiving tube (1) by a press fit.

6. A pressure-measuring apparatus according to any one of the preceding Claims,
wherein the sleeve (2) has a first engagement means and the receiving tube (1) has a complementary second engagement means in order to prevent - in a positively locking manner - the sleeve from rotating with respect to the receiving tube.

7. A pressure-measuring apparatus according to any one of the preceding Claims, additionally comprising a sealing ring (8) which is clamped between the end face of the sensor element (3) and the axial stop face of the radial shoulder (12).

## Revendications

1. Dispositif de mesure de pression, comportant :
un élément capteur de pression (3) avec un corps de déformation en forme de membrane disposé dans une surface frontale de l'élément capteur de pression ;
un tuyau de réception (1) essentiellement cylindrique avec un premier filetage sur la paroi du tube, et une épaule pour recevoir les forces axiales qui s'étend à partir de la paroi cylindrique du tube de réception vers l'intérieur de façon radiale et définie une ouverture de capteur;
un élément de vissage (7) avec un deuxième filetage complémentaire au premier filetage, et au moins une surface de serrage sur le côté frontal destiné à réceptionner les forces axiales ; l'élément de vissage pouvant être vissé dans le tube de réception (1) afin de serrer (3) l'élément capteur de pression entre la surface de serrage et l'épaule de façon axiale ;
le dispositif de mesure de pression (3) présentant en outre, au moins un premier élément d'encliquetage (21) que l'on ne peut pas tourner par rapport au tube de réception (1), et un élément de transmission (4) serré entre l'élément de vissage (7) et l'élément capteur de pression (3), pour la transmission de la force de serrage axiale avec au moins un deuxième membre d'encliquetage (41), lequel s'engrène avec au moins un premier membre d'encliquetage (21) pour empêcher la rotation du membre de transmission (4) ;
le dispositif de mesure de pression (3) présentant, en outre, une douille (2) cylindrique qui est disposée dans le tube de réception (1) et positionne l'élément capteur de pression (3) à distance de la paroi cylindrique du tube de réception (1) ; la douille (2) comportant au moins un premier élément d'encliquetage (21).

2. Dispositif de mesure de pression selon la revendication 1, où au moins un premier membre d'encliquetage (21) est formé en tant que languette qui s'étend d'une surface frontale de la douille (2) en direction axiale.

3. Dispositif de mesure de pression selon la revendication 1, où au moins un premier membre d'encliquetage est formé en tant que saillie qui s'étend de façon radiale vers l'intérieur à partir de la douille (2).

4. Dispositif de mesure de pression selon la revendication 1, où au moins un premier membre d'encliquetage est formé en tant qu'évidement dans la douille (2).

5. Dispositif de mesure de pression selon une des revendications 1 à 4, où la douille (2) est fixée par serrage dans le tube de réception (1).

6. Dispositif de mesure de pression selon une des revendications précédentes, où la douille (2) présente un premier moyen de pénétration et le tube de réception un deuxième moyen complémentaire de pénétration pour sécuriser a moyen d'une adaptation de forme contre une rotation par rapport au tube de réception.

7. Dispositif de mesure de pression selon une des revendications précédentes, comprenant en outre un anneau d'étanchéité (8) qui est tendu entre la surface frontale de l'élément capteur (3) et la surface de butée axiale de l'épaule (12) radiale.
